# EUROPEAN PATENT SPECIFICATION

(11) **EP 1 183 295 B1**
(45) Date of publication and mention of the grant of the patent: **24.10.2007**
(21) Application number: 99928428.4
(22) Date of filing: 07.06.1999
(51) Int. Cl.: C08G 18/50, C09J 175/02, C09J 175/12

(54) **POLYUREA-BASED ADHESIVES, ARTICLES THEREFROM, AND METHODS OF THEIR PREPARATION AND USE**
KLEBSTOFFE AUF BASIS VON POLYHARNSTOFF, GEGENSTÄNDE DAVON, UND VERFAHREN ZU IHRER HERSTELLUNG UND VERWENDUNG
ADHESIFS A BASE DE POLYUREE, ARTICLES FABRIQUES A PARTIR DE CES DERNIERS ET PROCEDES DE PREPARATION ET D'UTILISATION DE CES ADHESIFS

(43) Date of publication of application: 06.03.2002
(73) Proprietor: 3M Innovative Properties Company, St. Paul, MN 55133-3427 (US)
(72) Inventor: KINNING, David, J., Woodbury, MN 55125 (US); LEIR, Charles, M., Falcon Heights, MN 55108 (US); SHERMAN, Audrey, A., St. Paul, MN 55106 (US); DASTUR, Meherdil D., Saint Paul, MN 55108 (US)
(74) Representative: Vossius & Partner
(86) International application number: PCT/US1999/012687
(87) International publication number: WO 2000/075210

(56) References cited:
- EP-A- 0 380 236
- EP-A- 0 440 934
- US-A- 5 047 272
- US-A- 5 109 096

## Description

The present invention relates generally to the field of adhesives, specifically to the field of pressure-sensitive-adhesives and heat-activatable adhesives that are polyurea-based.

Adhesives have been used for a variety of marking, holding, protecting, sealing and masking purposes. Adhesive tapes generally comprise a backing, or substrate, and an adhesive. One type of adhesive, a pressure-sensitive-adhesive (PSA) is particularly preferred for many applications.

PSAs are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs are polymers designed and formulated to exhibit the requisite viscoelastic properties resulting in a desired balance of tack, peel adhesion, and shear strength. The most commonly used polymers for preparation of PSAs are natural rubber, synthetic rubbers (e.g., styrene/butadiene copolymers (SBR) and styrene/isoprene/styrene (SIS) block copolymers), and various (meth)acrylate (e.g., acrylate and methacrylate) copolymers. With the exception of several (meth)acrylates, which are inherently tacky, these polymers are typically blended with appropriate tackifying resins to render them pressure-sensitive.

One disadvantage of (meth)acrylates, however, is that (meth)acrylates often contain residual (i.e., unreacted) monomers and other low molecular weight impurities in the final adhesive compositions. Residual monomers and low molecular weight impurities may be problematic in certain applications, such as medical and electronic applications. In medical and electronic applications, residual monomers and impurities may cause, for example, undesirable odor or potential contamination of substrates/articles (e.g., hard disk drives) in which they are in contact.

Much less frequently described are PSAs based on polyurethane-based polymers, such as the polyether/polyurethane polymers described by Allport and Mohajer in Block Copolymers, D.C. Allport and W.H. Janes Ed., (1973) pp. 443-92. Also see U.S. Patent Nos. 3,718,712 (Tushaus) and 3,767,040 (Tushaus). It has been difficult to obtain balanced viscoelastic properties when using polyurethane-based polymers, however, which may explain their infrequent use when preparing PSAs. For example, U.S. Patent No. 5,591,820 (Kydonieus et al.) indicates that existing polyurethane-based adhesives function either as weak elastics or high viscosity liquids. The former, weak elastics, tend to fail gradually by peeling away from surfaces to which they have been applied. The latter, high viscosity liquids, typically leave a residue upon removal from a surface and their cohesive strength is too low to withstand stresses applied in many applications.

Polyurethane-based polymers are typically prepared by reacting an isocyanate-functional material with a hydroxy-functional material. Some examples of polyurethane-based polymers used for formulating PSAs include those described in U.S. Patent No. 3,437,622 (Dahl). Polyurethane-based polymers are not always desirable, however, because they typically require either a catalyst or external heat source to form the urethane linkages. For example, see U.S. Patent No. 5,591,820 (Kydonieus et al.).

Furthermore, many polyurethane-based polymers must be crosslinked to have adequate cohesive strength as PSAs. There are two general methods used to crosslink polyurethane-based polymers. One method is chemical crosslinking through the formation of covalent bonds. However, the degree of chemical crosslinking must be carefully controlled so that the moduli of the resulting material is not increased to the extent that peel adhesion and tack are adversely affected. Furthermore, premature gellation of the adhesive and limited pot life of the PSA may also be problematic when using chemical crosslinking to bolster the cohesive strength of a PSA.

A common chemical crosslinking method described in the literature is the use of multivalent components to achieve a crosslinked network in the adhesive composition. For example, the crosslinked network may be formed by incorporating urethane or urea linkages between polyurethane polymer chains. Urea linkages are typically incorporated into the material by, for example, using a polyamine. For example, see JP-07-102,233 (Sekisui Chemical) and JP-62-297,375 (Kao Corp.). Some of the resulting materials purportedly have PSA properties, either in a partially cured state or in the final composition.

For example, U.S. Patent No. 4,803,257 (Goel) describes a polyurethane adhesive (i.e., having structural or semi-structural properties) comprising a mixture of a polyisocyanate blocked with a phenolic agent and a polyamine curing agent. The composition may optionally include a polyepoxide. In the partially cured state, this composition is said to exhibit properties similar to those of PSAs. The compositions cure at room temperature to reach the full strength of a structural adhesive.

Also, U.S. Patent Nos. 3,437,622 and 3,761,307 (Dahl) describe preparation of polyurethane polymers suitable for making PSAs, and which can be crosslinked with certain amines. Suitable amines are taught to be aromatic diamines or polyamines with the amino groups sterically or otherwise hindered by negative groups (Cl, Br, I, OH, etc). These negative groups decrease the reactivity of neighboring amino groups. When crosslinked, it is required that the amino groups be unreactive enough so that polyols and isocyanates can react to form polyurethane polymers before the isocyanates extensively react with the amino groups.

A second method of crosslinking polyurethane-based polymers is physical crosslinking. Physical crosslinking such polymers typically involves incorporation of urea segments in the polyurethane-based polymeric chain using, for example, an amine chain extender. However, polyurea-based polymers are even less likely candidates for formulation into PSAs because polyureas have even higher moduli than the corresponding polyurethanes due to the chemical nature of the urea groups in polyureas. Accordingly, polyureas tend to be more elastic and adhesives prepared therefrom may not have adequate peel adhesion and tack, properties that may be desired for certain applications. For example, see Chen, Z. et al., "The Study of Polyurethanes and Polyureas by Transmission Spectra of Fourier Transform Infrared Spectroscopy," Gaofenzi Cailiao Kexue Yu Gongcheng 1993, 9(3), pp. 58-62 and Chen, Z., "Study About Effect of Urea and Urethane Linkages on Phase Separation of Segmented Polyurethanes and Polyureas," Gaofenzi Cailiao Kexue Yu Gongcheng 1990, 6(5), pp. 66-71. The higher moduli of polyureas present a problem when trying to formulate the polyureas into PSAs, particularly PSAs having adequate peel adhesion for many applications. Perhaps because of this apparent difficulty, there are very few descriptions of PSAs that are polyurea-based. Accordingly, polyurea-based polymers, particularly silicone polyurea-based polymers are typically used for release materials, such as those described in U.S. Patent No. 5,866,222 (Seth et al.).

Polyurea-based polymers provide an alternative to polyurethane-based polymers. Polyureas are preparable by reacting an isocyanate-functional material with an amine-functional material. Advantageously, polyurea-based polymers typically do not require a catalyst or an external heat source for their preparation.

Among the few descriptions of polyurea-based PSAs, organosiloxane-polyurea block copolymers useful as PSAs are described by Leir et al. (EP Patent Publication No. 0 250 248 A2). The organosiloxane-polyurea block copolymers described therein are prepared by the condensation polymerization of a difunctional organopolysiloxane amine with a diisocyanate. The reaction may include an optional difunctional amine chain extender. These copolymers are stated to be useful, when tackified, as PSA compositions.

Leir et al., however, require the preparation of unique diaminopolysiloxanes. Leir et al. also teach that an approximately equal weight of the silicone tackifier resin with respect to the organosiloxane-polyurea block copolymer is used to make PSAs therein. The use of such highly tackified compositions may not be desirable, however, because tackifiers typically include a relatively high amount of low molecular weight impurities, which may be problematic in certain applications. Furthermore, certain such tackifiers generally tend to be relatively expensive.

Another drawback of using polyurethane-based polymers for the formulation of PSAs is the difficulty often experienced in finding suitable tackifiers for the polymers. For example, U.S. Patent No. 3,767,040 (Tushaus) teaches the use of certain unique tackifiers synthesized from cyclic terpene alcohols and aromatic isocyanates to provide polyurethane-based PSAs. Tushaus teaches, however, that the tackifiers therein were not found to be effective with natural rubber or styrenebutadiene rubbers or polyurethane polymers other than those specifically described therein to provide PSAs.

Other adhesive chemistries, particularly PSA chemistries, are desirable, particularly for broadening formulation latitude when preparing such adhesives. Furthermore, due to the advantages that polyureas provide over, for example, polyurethanes, it would be desirable to broaden pre-existing PSA chemistries to include further polyurea-based chemistries, particularly those that do not require such high tackification as those PSAs discussed by Leir et al. and those that do not contain such a large proportion of silicone in the polymers used to prepare the PSAs.

The present provides an adhesive composition as disclosed in claim 1 and an adhesive tape comprising said adhesive composition.

Adhesive compositions of the invention offer broad formulation latitude to those preparing pressure-sensitive and heat-activatable adhesives. The adhesive compositions also benefit from the advantages of being prepared from polyurea-based polymers. For example, many of PSA compositions of the invention do not require as high of a level of tackification as typically required when preparing conventional PSAs.

In one embodiment, adhesive compositions of the invention comprise a polyurea-based polymer, wherein the polyurea-based polymer does not require greater than about 45 parts by weight tackifier per hundred parts by weight polyurea-based polymer to exhibit a peel adhesion of greater than about 10.0 N/dm when tested according to ASTM D 3330-90, wherein ASTM D 3330-90 is modified by substituting a glass substrate for a stainless steel substrate. More preferably, the composition exhibits a peel adhesion of greater than about 20.0 N/dm when tested according to ASTM D 3330-90, wherein ASTM D 3330-90 is modified by substituting a glass substrate for a stainless steel substrate.

It may also be desirable to formulate the adhesive such that it exhibits a certain shear strength. In one embodiment, the composition exhibits a shear strength of greater than about one minute when tested according to ASTM D 3654-88. In more particular embodiments, the composition exhibits a shear strength of greater than about 10 minutes when tested according to ASTM D 3654-88. More particularly, the composition may exhibit a shear strength of greater than about 100 minutes when tested according to ASTM D 3654-88.

The composition may comprise a variety of additives. For example, the composition may further comprise an acid-containing polymeric material.

The composition may also further comprise a tackifier. The tackifier may be present in an amount of up to about 45 parts by weight tackifier per hundred parts by weight polyurea-based polymer. Alternatively, however, the tackifier may be present in an amount of greater than about 45 parts by weight tackifier per hundred parts by weight polyurea-based polymer.

The adhesive composition according to claim 1 comprises a polyurea-based polymer, wherein the polyurea-based polymer a segmented copolymer represented by the repeating units of Formula I: 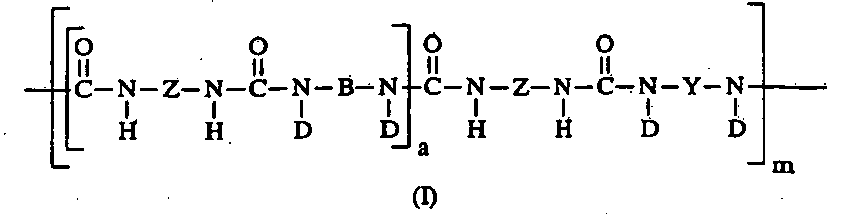 wherein:
each B is independently a polyvalent radical (e.g., B is a polyoxyalkylene);
each D is independently selected from the group consisting of hydrogen, an alkyl group, a cycloalkyl group, a phenyl group, a group that completes a ring structure that includes B to form a heterocycle, and mixtures thereof;
each Z is independently a polyvalent radical;
each Y is independently a polyoxyalkylene (e.g., Y is selected from the group consisting of polyethylene oxide, polypropylene oxide, and polytetramethylene oxide);
m is an integer greater than zero; and
a is zero or an integer greater than zero; and wherein the polyurea-based polymer is free of segments derived from polysiloxane polyamines.

In another specific embodiment, the polyurea-based polymer comprises a segmented copolymer, wherein at least about 0.5 mole fraction of linkages between segments in a backbone of the polymer are urea linkages. More preferably, the polymer, comprises a segmented copolymer, wherein at least about 0.75 mole fraction of linkages between segments in a backbone of the polymer are urea linkages. Even more preferably, the polyurea-based polymer comprises a segmented copolymer, wherein at least about 0.95 mole fraction of linkages between segments in a backbone of the polymer are urea linkages.

The adhesive composition is a pressure-sensitive adhesive or heat-activatable adhesive, depending on the particular formulation. One particular embodiment of a heat-activatable adhesive composition comprises: a polyurea-based polymer; and optionally, at least one tackifier, wherein the composition exhibits a peel adhesion of greater than about. 10.0 N/dm when tested according to ASTM D 3330-90, wherein ASTM D 3330-90 is modified by substituting a glass substrate for a stainless steel substrate and adding a step of using sufficient heat to bond the heat-activatable composition to the glass substrate.

Adhesive compositions of the invention may be used in a variety of applications. For example, the adhesive compositions may be used in adhesive tapes that comprise a backing and the adhesive composition coated on at least a portion thereof. It may be preferred to use a polyurea backing for such adhesive tapes. Adhesive tapes may also further comprise a release material coated on at least a portion of the backing, on a side of the backing opposite of the adhesive.

A method of preparing adhesive compositions as disclosed in claim 1 comprises the steps of:
providing at least one polyisocyanate;
providing at least one polyamine;
reacting the at least one polyisocyanate with the at least polyamine to form the polyurea-based polymer; and
optionally adding the tackifier to the polyurea-based polymer.
The method may further comprise the step of hot-melt coating the adhesive composition onto a substrate. This may be particularly useful when the at least one polyisocyanate and the at least one polyamine are reacted by reactive extrusion. Alternatively, the method may further comprise the step of solvent coating the adhesive composition onto a substrate. In the method of the invention, the polyurea-based polymer may be polymerized on-web.

As summarized, adhesives of the invention are polyurea-based. The adhesives can be formulated into pressure-sensitive-adhesives or heat-activatable adhesives.

"Pressure-Sensitive-Adhesives" (PSAs) of the invention have the following properties at room temperature: (1) aggressive and permanent tack, (2) adherence with no more than finger pressure, (3) sufficient ability to hold onto an adherend, and (4) sufficient cohesive strength to be removed cleanly from the adherend. Wide ranges of PSA properties are obtainable with compositions of the invention.

"Heat-activatable adhesives" are substantially nontacky at room temperature, but become tacky upon heating. Heat-activatable systems, unlike PSA systems, rely on a combination of pressure and heat to bond to a surface.

In certain embodiments, adhesives of the invention have excellent peel adhesion after bonding, preferably exhibit a 180° peel adhesion of greater than about 1.0 N/dm, more preferably greater than about 10.0 N/dm, most preferably greater than about 20.0 N/dm when tested according to ASTM D 3330-90, substituting a glass substrate for the stainless steel substrate described in the test. If the composition is a heat-activatable adhesive, ASTM D 3330-90 is also modified by adding a step of using sufficient heat to bond the heat-activatable adhesive composition to the glass substrate at the desired peel adhesion value.

In certain embodiments, adhesives of the invention preferably exhibit a shear strength after bonding of greater than about one minute, more preferably greater than about 10 minutes, most preferably greater than about 100 minutes when tested according to ASTM D 3654-88. If the composition is a heat-activatable adhesive, ASTM D 3654-88 is also modified by adding a step of using sufficient heat to bond the heat-activatable adhesive composition to the stainless steel substrate at the desired peel adhesion value.

Advantageously, adhesives of the invention provide an alternative to conventional adhesive chemistries. The adhesives are polyurea-based, which provides many advantages. For example, the physical force of attraction between urea groups on adjacent polymer chains provides increased cohesive strength to adhesives in which they are used. Thus, advantageously, chemical crosslinking of the polymer is not required. Furthermore, as compared to, for example, polyurethane-based polymers, preparation of the polyurea-based polymers used in adhesives of the invention is relatively simple in that it does not require catalysts or an external heat source for polymerization of the polyurea-based polymers.

In general, polyurea-based polymers of the invention are segmented copolymers comprising a substantial proportion of urea linkages in the backbone of the polymer. However, those polyurea-based polymers comprising segmented copolymers wherein at least about 0.5 mole fraction (i.e., fraction of the total molar units of linkages between segments in the backbone of the polymer) of the linkages between segments in the backbone of the polymer are urea linkages are considered preferred polyurea-based polymers of the invention. More preferably, at least about 0.75 mole fraction, and even more preferably at least about 0.95 mole fraction of the linkages between segments in the backbone of the polymer are urea linkages. Most preferably, the linkages between segments in the backbone of the copolymers are essentially all urea linkages. The remainder of the linkages can be any suitable chemistry, such as, for example, urethane linkages. Again, however, it is preferred that substantially all of the linkages between segments in the backbone of the copolymers are urea linkages.

Polyurea-based polymers of the invention are segmented copolymers represented by the repeating unit of Formula I: 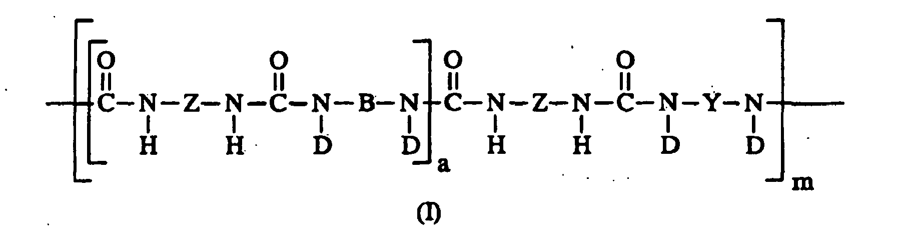 wherein:
Each B is independently a polyvalent radical. For example, B can be an arylene (e.g., phenylene), aralkylene, alkylene, cycloalkylene, polyoxyalkylene (e.g., polyoxyethylene, polyoxypropylene, and polyoxytetramethylene), or mixtures thereof. However B is free of siloxane units.
Each D is independently selected from the group consisting of hydrogen, an alkyl group, a cycloalkyl group, a phenyl group, a group that completes a ring structure that includes B to form a heterocycle, and mixtures thereof. Preferably, if D is an alkyl group, the alkyl group is about 1 to about 18 carbon atoms, more preferably about 1 to about 12 carbon atoms, and most preferably about 1 to about 10 carbon atoms.
Each Y is independently a polyoxyalkylene (e.g., polyoxyethylene, polyoxypropylene, polyoxytetramethylene, or mixtures thereof).
Each Z is independently a polyvalent radical, which may be polymeric or oligomeric. Z can be based on arylene (e.g., phenylene), aralkylene, alkylene, cycloalkylene, or polyoxyalkylene (e.g., polyoxyethylene, polyoxypropylene, and polyoxytetramethylene) segments and mixtures thereof. Also, preferably Z has about 1 to about 20 carbon atoms, and more preferably about 6 to about 20 carbon atoms. For example, Z can be selected from 2,6-tolylene; 4,4'-methylenediphenylene; 3,3'-dimethoxy-4,4'-biphenylene; tetramethy-*m*-xylylene; 4,4'-methylenedicyclohexylene; 3,5,5-trimethyl-3-methylenecyclohexylene; 1,6-hexamethylene; 1,4-cyclohexylene; 2,2,4-trimethylhexylene; or polymeric or oligomeric alkylene, aralkylene, or oxyalkylene radicals and mixtures thereof. When Z is a polymeric or oligomeric material it may include, for example, urethane linkages.
The letter "a" is zero or an integer greater than zero.
The letter "m" is an integer greater than zero, preferably greater than about 10.
The polyurea-based polymers are derivable by reacting at least one polyamine with at least one polyisocyanate. These reactants are described in further detail below.

### Polyisocyanate

Polyisocyanates provide urea linkages when reacted with an amine-functional material. Polyisocyanates have at least two isocyanate functional groups. Generally, diisocyanates are used in the present invention. However, polyisocyanates having three or more isocyanate functional groups can be used, particularly when crosslinking of the polyurea-based polymer is desired.

Preferred diisocyanates useful in the process of the present invention are represented by Formula II:

OCN-Z-NCO (II)

wherein Z is as defined above.

However, any diisocyanate that can react with a polyamine can be used in the present invention. Examples of such diisocyanates include, but are not limited to, aromatic diisocyanates (e.g., 2,6-toluene diisocyanate; 2,5-toluene diisocyanate; 2,4-toluene diisocyanate; *m*-phenylene diisocyanate; *p*-phenylene diisocyanate; methylene bis(*o-*chlorophenyl diisocyanate); methylenediphenylene-4,4'-diisocyanate; polycarbodiimide-modified methylenediphenylene diisocyanate; (4,4'-diisocyanato-3,3',5,5'-tetraethyl) diphenylmethane; 4,4'-diisocyanato-3,3'-dimethoxybiphenyl (o-dianisidine diisocyanate); 5-chloro-2,4-toluene diisocyanate; and 1-chloromethyl-2,4-diisocyanato benzene), aromatic-aliphatic diisocyanates (e.g., m-xylylene diisocyanate and tetramethyl-*m*-xylylene diisocyanate), aliphatic diisocyanates (e.g., 1,4-diisocyanatobutane; 1,6-diisocyanatohexane; 1,12-diisocyanatododecane; and 2-methyl-1,5-diisocyanatopentane), and cycloaliphatic diisocyanates (e.g., methylenedicyclohexylene-4,4'-diisocyanate; 3-isocyanatomethyl-3,5,5-trimethylcyclohexyl isocyanate (isophorone diisocyanate); 2,2,4-trimethylhexyl diisocyanate; and cyclohexylene-1,4-diisocyanate), and other compounds (e.g., alkyl, polyoxyalkyl, polyester, polybutadienyl, and the like) terminated by two isocyanate functional groups (e.g., the diurethane of toluene-2,4-diisocyanate-terminated polypropylene oxide glycol).

Particularly preferred diisocyanates include: 2,6-toluene diisocyanate; methylenediphenylene-4,4'-diisocyanate; polycarbodimide-modified methylenediphenyl diisocyanate; 4,4'-diisocyanato-3,3'-dimethoxybiphenyl(*o*-dianisidine diisocyanate); tetramethyl-m-xylylene diisocyanate; methylenedicyclohexylene-4,4'-diisocyanate; 3-isocyanatomethyl-3,5,5-trimethylcyclohexyl isocyanate (isophorone diisocyanate); 1,6-diisocyanatohexane; 2,2,4-trimethylhexyl diisocyanate; and cyclohexylene-1,4-diisocyanate. More particularly preferred are tetramethyl-*m*-xylylene diisocyanate, 3-isocyanatomethyl-3,5,5-trimethylcyclohexyl isocyanate (isophorone diisocyanate), and methylenedicyclohexylene-4,4'-diisocyanate.

Triisocyanates include, but are not limited to, polyfunctional isocyanates, such as those produced from biurets, isocyanurates, adducts and the like. Some commercially available polyisocyanates include portions of the DESMODUR and MONDUR series from Bayer, Pittsburgh, PA and the PAPI series of Dow Plastics; Midland, MI. Preferred triisocyanates include those available from Bayer under the trade designations DESMODUR N-3300 and MONDUR 489.

### Polyamine

Any suitable compound having at least two amine functional groups can be used for the polyamine in the present invention. For example, the compound may be a diamine, triamine, etc. Examples of polyamines useful in the present invention include, but are not limited to, polyoxyalkylene polyamines and alkylene polyamines. Mixtures of polyamines may also be used for the polyamine component.

Polyurea-based polymers of the invention are free of segments derived from polysiloxane polyamines.

### Polyoxyalkylene Polyamines

The polyoxyalkylene polyamine may be, for example, a polyoxyethylene polyamine, polyoxypropylene polyamine, polyoxytetramethylene polyamine, or mixtures thereof. Polyoxyethylene polyamine may be especially useful when preparing the adhesive for medical applications, for example, where high vapor transfer medium may be desirable. Polyoxyethylene polyamine may also be especially useful when preparing the adhesive for medical applications, for example, where water absorbency may be desirable.

Many polyoxyalkylene polyamines are commercially available. For example, polyoxyalkylene diamines are available under trade designations such as D-230, D-400, D-2000, D-4000, DU-700, ED-2001 and EDR-148 (available from Huntsman Chemical; Houston, TX under the family trade designation JEFFAMINE). Polyoxyalkylene triamines are available under trade designations such as T-3000 and T-5000 (available from Huntsman Chemical; Houston, TX).

### Alkylene Polyamines

Any suitable alkylene polyamine can be used in the present invention. Such alkylene polyamines include, for example, ethylene diamine; diethylene triamine; triethylene tetramine; propylene diamine; butylene diamine; hexamethylene diamine; cyclohexylene diamine; piperazine; 2-methyl piperazine; phenylene diamine; tolylene diamine; xylylene diamine;.tris(2-aminoethyl) amine; 3,3'-dinitrobenzidine; 4,4'-methylenebis(2-chloroaniline); 3,3'-dichloro-4,4'-biphenyl diamine; 2,6-diaminopyridine; 4,4'-diaminodiphenylmethane; menthane diamine; m-xylene diamine; isophorone diamine; and dipiperidyl propane. Many alkylene polyamines are also commercially available. For example, alkylene diamines are available under trade designations such as DYTEK A and DYTEK EP (available from DuPont Chemical; Wilmington, DE).

### Preparation of the Polyurea-Based Polymer

The compositions and constructions of the present invention can be made by solvent processes, solventless processes (e.g., continuous solventless processes, such as reactive extrusion or polymerization on a surface or in a mold) or by a combination of these methods.

Some of the processes suitable for the preparation of the polyurea-based polymers include reacting at least one polyamine and at least one polyisocyanate in a reactor to form the polyurea-based polymer. The polyurea-based polymer can then be removed from the reaction vessel. Alternatively, the polymerization can be carried out by continuously mixing the reactants and depositing the reactants on a surface (e.g., release liner or substrate) or into a mold and polymerizing the mixture in place.

Properties of the compositions of the present invention result from the molecular weight, architecture, and chemical composition of the polyurea-based polymer. For example, one skilled in the art can expect the optimum material for a particular application to be a function of the isocyanate-to-amine ratio, polyisocyanate and polyamine architecture, order of reactant addition, mixing mechanism, mixing speed, reactor temperature, reactor configuration and size, and the presence of any fillers, additives, or property modifiers added, as well as other factors. Furthermore, if solventless processing is used, reactor throughput, residence time, and residence time distribution can affect the molecular weight and architecture of the resulting polyurea-based polymers produced. These variables allow those of skill in the art to vary the molecular weight, architecture, and chemical composition of the resulting polyurea-based polymers over quite a wide range, thus enabling one to tailor the properties to suit a variety of applications.

Any reactor that can provide intimate mixing of the polyamine and polyisocyanate reactants and the reaction product thereof is suitable for use in the invention. The reaction may be carried out, for example, as a batch process using, for example, a flask equipped with a mechanical or magnetic stirrer. Alternatively, the reaction may be carried out in a continuous process.

The reactants can be added simultaneously or sequentially into the reactor and in any sequential order. For example, polyisocyanate can be the first component added into the reactor. Polyamine can then be added downstream in the reactor. Alternately, the polyisocyanate can be added after the polyamine has been introduced into the reactor.

Similarly, the various additives can be added in any order, provided the addition of an additive does not substantially interfere with (i.e., preventing any) reaction of the reactants. For example, an additive that is reactive with a polyisocyanate reactant would typically not be added to the reactor until after the reaction of the polyisocyanate with the polyamine if the additive would prevent reaction of the polyisocyanate with the polyamine.

In general, the isocyanate to amine ratio is preferably about 0.9 to about 1.1, most typically about 1.0. If the isocyanate to amine ratio is outside this preferred range, chemical crosslinking of the composition may be necessary to obtain desired adhesive, particularly PSA, properties.

The polyisocyanate and polyamine components may be selected such that the polyurea-based polymers are inherently tacky. That is, the polyurea-based polymers may have PSA properties without the necessity of adding a tackifier resin to the composition. Tackifier resins often contain a variety of impurities, which may be of low molecular weight. Thus, reduction or elimination of their use may be advantageous in certain applications. For example, in medical and electronic applications, where traces of low molecular weight compounds may be problematic, inherently tacky polyurea-based polymers may be preferred.

To make inherently tacky polyurea-based polymers, reactants (e.g., polyamine and polyisocyanate components) are selected such that the polyurea-based polymer has a tensile modulus of less than the Dahlquist criterion, which is on the order of 10⁵ Pascal. Although such polyurea-based polymers are inherently tacky, a tackifier resin may optionally be added to the composition if desired, for example, to modify the PSA properties (e.g., increase peel adhesion and tack of the PSA) in a desired manner.

### Tackifiers

Any suitable tackifier may be used to make adhesive compositions of the invention. The necessity for and amount of tackifier is generally determined based on whether the polyurea-based polymers are inherently tacky and what adhesive properties (i.e., PSA or heat-activatable adhesive) are desired. If the polyurea-based polymers are inherently tacky, a tackifier may not be necessary to obtain adhesive compositions of the invention.

Generally, if used, the tackifier should be compatible with the polyurea-based polymer, preferably at least one of the segments of the polymer that is polymeric or oligomeric. "Compatible" tackifiers are those that, during mixing of the tackifier with the polyurea-based polymer, form a substantially homogenous mixture, as evidenced by a lack of macroscopic phase separation of the tackifier from the polyurea-based polymer visible to the unaided human eye.

A wide variety of tackifier chemistries are known to those of skill in the art. For example, the tackifier chemistry may be based on non-silicates (e.g., terpene phenolics), silicates, and the like. Terpene phenolic-based tackifiers are commercially available from Arizona Chemical; Panama City, FL, under the trade designation NIREZ. Silicate-based tackifiers are commercially available from GE Silicones; Waterford, NY, under the trade designation MQ.

When used, tackifiers are added in amounts sufficient to attain the desired adhesive properties. For example, tackifiers may be used to render the polyurea-based polymer pressure-sensitive. To make a PSA, typically, the amount of tackifier used is about 80 parts per hundred or less, based on weight of the polyurea-based polymer. More preferably, the amount of tackifier used is about 65 parts per hundred or less, even more preferably about 45 parts per hundred or less, based on weight of the polyurea-based polymer. If higher amounts of tackifier are used with certain polyurea-based polymers, PSA properties may be difficult to obtain at room temperature. Also, if tackifiers are used in lower amounts with certain polyurea-based polymers, PSA properties may be difficult to obtain at room temperature. Such compositions may need to be heated to adhere the compositions to a surface. In other words, these compositions may be heat-activatable adhesives.

### Additives

The composition of the present invention may also optionally contain various fillers and other property modifiers. Fillers, such as fumed silica, fibers (e.g., glass, metal, inorganic, or organic fibers), carbon black, glass or ceramic beads/bubbles, particles (e.g., metal, inorganic, or organic particles), polyaramids (e.g., those available from DuPont Chemical Company; Wilmington, DE under the trade designation, KEVLAR), and the like which can be added in amounts up to about 50 parts per hundred parts of the polyurea-based polymer, provided that if and when incorporated, such additives are not detrimental to the properties desired in the final composition. Other additives such as dyes, inert fluids (e.g., hydrocarbon oils), plasticizers, pigments, flame retardants, stabilizers, antioxidants, compatibilizers, antimicrobial agents (e.g., zinc oxide), electrical conductors, thermal conductors (e.g., aluminum oxide, boron nitride, aluminum nitride, and nickel particles), and the like can be blended into these systems in amounts of generally from about 1 to about 50 percent by total volume of the composition.

Furthermore, the polyurea-based adhesive composition may be further physically crosslinked. For example, acid-containing polymeric materials may be added to the composition for physical interaction with the urea linkages of the polyurea-based polymer. Generally, only minor amounts (e.g., less than about 20, or even as low as one, part per hundred or less based on one hundred parts of the polyurea-based polymer) may provide enhanced physical crosslinking of the adhesive composition. These polymeric materials may significantly increase the shear strength of the adhesive without deleteriously affecting the peel adhesion of the adhesive. Examples of suitable acid-containing polymeric materials include: copolymers of isooctyl acrylate/acrylic acid, and other copolymers described in PCT Publication No. WO 98/13,135.

### Applications of the Polyurea-Based Polymer

The adhesive is readily applied to a substrate. For example, the adhesive can be applied to sheeting products (e.g., decorative, reflective, and graphical), labelstock, and tape backings. The substrate can be any suitable type of material depending on the desired application. Typically, the substrate comprises a nonwoven, paper, polymeric film (e.g., polypropylene (e.g., biaxially oriented polypropylene (BOPP)), polyethylene, polyurea, or polyester (e.g., polyethylene terephthalate)), or release liner (e.g., siliconized liner).

Thus, adhesives according to the present invention can be utilized to form tape, for example. To form a tape, the adhesive is coated onto at least a portion of a suitable backing. A release material (e.g., low adhesion backsize) can be applied to the opposite side of the backing, if desired. When double-sided tapes are formed, the adhesive is coated onto at least a portion of both sides of the backing.

Adhesives of the invention can be applied to a substrate using methods well known to one of ordinary skill in the art. For example, the polyamine and polyisocyanate components can be reacted and applied using melt extrusion techniques to form the adhesive.

The adhesive can be formed into a film or coating by either continuous or batch processes. An example of a batch process is the placement of a portion of the adhesive between a substrate to which the film or coating is to be adhered and a surface capable of releasing the adhesive film or coating to form a composite structure. The composite structure can then be compressed at a sufficient temperature and pressure to form a adhesive coating or film of a desired thickness after cooling. Alternatively, the adhesive can be compressed between two release surfaces and cooled to form an adhesive transfer tape useful in laminating applications.

Continuous forming methods include drawing the adhesive out of a film die and subsequently contacting the drawn adhesive to a moving plastic web or other suitable substrate. A related continuous method involves extruding the adhesive and a coextruded backing material from a film die and cooling the layered product to form an adhesive tape. Other continuous forming methods involve directly contacting the adhesive to a rapidly moving plastic web or other suitable preformed substrate. Using this method, the adhesive is applied to the moving preformed web using a die having flexible die lips, such as a rotary rod die. After forming by any of these continuous methods, the adhesive films or layers can be solidified by quenching using both direct methods (e.g., chill rolls or water baths) and indirect methods (e.g., air or gas impingement).

Adhesives can also be coated using a solvent-based method. For example, the adhesive can be coated by such methods as knife coating, roll coating, gravure coating, rod coating, curtain coating, and air knife coating. The coated solvent-based adhesive is then dried to remove the solvent. Preferably, the coated solvent-based adhesive is subjected to elevated temperatures, such as those supplied by an oven, to expedite drying of the adhesive.

### Examples

These examples are merely for illustrative purposes only and are not meant to be limiting on the scope of the appended claims. All parts, percentages, ratios, etc. in the examples and the rest of the specification are by weight unless indicated otherwise.

### Test Methods

The following test methods were used to characterize polyurea-segmented copolymer based compositions produced in the following examples.

### 180° Peel Adhesion

This peel adhesion test is similar to the test method described in ASTM D 3330-90, substituting a glass substrate for the stainless steel substrate described in the test (for the present purpose, also referred to as "glass substrate peel adhesion test"). If the composition being tested was a heat-activatable adhesive, ASTM D 3330-90 was also modified by adding a step of using sufficient heat to bond the heat-activatable adhesive composition to the glass substrate at the desired peel adhesion value.

Polyurea-based adhesive coatings on polyester film were cut into 1.27 centimeter by 15 centimeter strips. Each strip was then adhered to a 10 centimeter by 20 centimeter clean, solvent washed glass coupon using a 2-kilogram roller passed once over the strip. The bonded assembly dwelled at room temperature for about one minute and was tested for 180° peel adhesion using an IMASS slip/peel tester (Model 3M90, commercially available from Instrumentors Inc., Strongsville, OH) at a rate of 2.3 meters/minute (90 inches/minute) over a five second data collection time. Two samples were tested; the reported peel adhesion value is an average of the peel adhesion value from each of the two samples.

### Shear Strength

This shear strength test is similar to the test method described in ASTM D 3654-88.

Polyurea-based adhesive coatings on polyester film were cut into 1.27 centimeter (0.5 inch) by 15 centimeter (6 inch) strips. Each strip was then adhered to a stainless steel panel such that a 1.27 centimeter by 1.27 centimeter portion of each strip was in firm contact with the panel and one end portion of the tape being free. The panel with coated strip attached was held in a rack such that the panel formed an angle of 178° with the extended tape free end which was tensioned by application of a force of one kilogram applied as a hanging weight from the free end of the coated strip. The 2° less than 180° was used to negate any peel forces, thus ensuring that only shear strength forces were measured, in an attempt to more accurately determine the holding power of the tape being tested. The time elapsed for each tape example to separate from the test panel was recorded as the shear strength. All shear strength failures (if the adhesive failed at less than 10,000 minutes) reported herein were cohesive failures of the adhesive. Each test was terminated at 10,000 minutes, unless the adhesive failed at an earlier time (as noted).

**Table of Abbreviations**

| **Trade Designation or Other Abbreviation** | **Description** |
|---|---|
| JEFFAMINE DU700 | a urea condensate of a polyoxypropylenediamine of approximately 700 molecular weight, commercially available from Huntsman; Houston, TX |
| TMXDI | tetramethyl-m-xylylene diisocyanate, commercially available from Cytec Industries; West Patterson, NJ |
| DYTEK A | an organic diamine, commercially available from DuPont; Wilmington, DE |
| DESMODUR W H12MDI (also referred to as "H-MDI") | Methylenedicyclohexylene-4,4'-diisocyanate, commercially available from Bayer; Pittsburgh, PA |
| JEFFAMINE D400 | Polyoxypropylenediamine of approximately 400 molecular weight, commercially available from Huntsman; Houston, TX |
| JEFFAMINE D2000 | a polyoxypropylenediamine of approximately 2,000 molecular weight, commercially available from Huntsman; Houston, TX |
| JEFFAMINE ED2001 | Polyoxyalkyleneamine of approximately 2,000 molecular weight, commercially available from Huntsman; Houston, TX |
| NIREZ 2019 | a terpene phenolic tackifier resin, commercially available from Arizona Chemical; Panama City, FL |
| PET | an aminated-polybutadiene primed polyester film of polyethylene terephthalate having a thickness of 38 micrometers |
| SP 553 | a terpene phenolic tackifier resin, commercially available from Schenectady International, Inc.; Schenectady, NY |
| PICAFYN A 100 | a terpene phenolic tackifier resin, commercially available from Hercules, Inc.; Wilmington, DE |
| PDMS diamine | an approximately 5,000 molecular weight polydimethylsiloxane diamine prepared as described in Example 2 of U.S. Patent Number 5,214,119 |
| MQ resin | a 60% solids solution of MQ silicate resin in toluene, commercially available from GE Silicones; Waterford, NY under the trade designation SR545 |
| ACP | An acid-containing polymeric material, specifically an 80/20 isooctyl acrylate/acrylic acid copolymer PSA such as those described in PCT Publication No. WO 98/13,135 |
| PHR | parts per 100 parts polyurea-based polymer |

### Example 1

In a glass reactor equipped with a magnetic stirrer was placed 20.0 grams of JEFFAMINE DU700 and 44.8 grams of 2-propanol to yield a homogenous solution. To this was added, with mixing, 5.20 grams of TMXDI. After one hour of stirring, 0.16 gram of DYTEK A and 0.71 gram of DESMODUR W H 12MDI were added to the solution and mixed for one day. The solution viscosity rose during this mixing.

The resulting solution was cast onto PET and dried at 70°C for 10 minutes to yield a 25 micrometer-thick coating. The peel adhesion and shear strength values for this adhesive are recorded in Table 1.

### Example 2

In a glass reactor equipped with a magnetic stirrer was mixed 12.0 grams of JEFFAMINE D400, 55.6 grams of 2-propanol, and 8.0 grams of JEFFAMINE D2000, to yield a homogenous solution. To this was added, with mixing, 8.02 grams of TMXDI. After one hour of stirring, 0.01 gram of DYTEK A and 0.05 gram of DESMODUR W H12MDI were added to the solution and mixed for one day. The solution viscosity rose during this mixing.

The resulting solution was cast onto PET and dried at 70°C for 10 minutes to yield a 25 micrometer-thick coating. The peel adhesion and shear strength values for this adhesive are recorded in Table 1.

### Example 3

In a glass reactor equipped with a magnetic stirrer was placed 20.0 grams of JEFFAMINE DU700 and 45.0 grams of 2-propanol to yield a homogenous solution. To this was added, with mixing, 5.01 grams of TMXDI. After one hour of stirring 0.46 gram of DESMODUR W H12MDI was added to the solution and mixed for one day. The solution viscosity rose during this mixing.

The resulting solution was cast onto PET and dried at 70°C for 10 minutes to yield a 25 micrometer-thick coating. The peel adhesion and shear strength values for this adhesive are recorded in Table 1.

**Table 1**

| **Example** | **Peel Adhesion (N/dm)** | **Shear Strength (minutes)** |
|---|---|---|
| 1 | 3.4 | 290 |
| 2 | 15.1 | 10,000 |
| 3 | 23.5 | 54 |

### Example 4

In a glass reactor equipped with a magnetic stirrer was mixed 40.0 grams of JEFFAMINE ED2001, 1.47 grams of DYTEK A and 116.7 grams of 2-propanol to yield a homogenous solution. To this solution was added 8.53 grams of DESMODUR W H12MDI and the resulting mixture was mixed for one day. The solution viscosity rose during this mixing.

A tackifier solution of 20.0 grams of NIREZ 2019 in 46.6 grams of toluene was added to the polymer solution. The resulting solution was cast onto PET and dried at 70°C for 10 minutes to yield a 25 micrometer-thick coating. The peel adhesion, shear strength, and tackifier level values for this adhesive are recorded in Table 2.

### Example 5

In a glass reactor equipped with a magnetic stirrer was placed 40.0 grams of JEFFAMINE D2000 and 116.7 grams of 2-propanol to yield a homogenous solution. To this solution was added 1.44 grams of DYTEK A and 8.56 grams of DESMODUR W H12MDI and the resulting mixture was mixed for one day. The solution viscosity rose during this mixing.

A tackifier solution of 15.0 grams of NIREZ 2019 in 35.0 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 6

In a glass reactor equipped with a magnetic stirrer was placed 42.5 grams of JEFFAMINE D2000 and 116.0 grams of 2-propanol to yield a homogenous solution. To this solution was added 0.57 gram of DYTEK A and 6.94 grams of DESMODUR W H 12MDI and the resulting mixture was mixed for one day. The solution viscosity rose during this mixing.

A tackifier solution of 20.0 grams of NIREZ 2019 in 46.6 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 7

In a glass reactor equipped with a magnetic stirrer was placed 20.0 grams of JEFFAMINE D2000 and 60.2 grams of 2-propanol to yield a homogenous solution. To this solution was added, with mixing, 1.18 grams of TMXDI. After one hour of stirring, 0.99 gram of DYTEK A and 3.64 grams of DESMODUR W H12MDI were added, and the resulting mixture was mixed for one day. The solution viscosity rose during this mixing.

A tackifier solution of 7.75 grams of NIREZ 2019 in 18.07 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 8

In a glass reactor equipped with a magnetic stirrer was placed 20.0 grams of JEFFAMINE D2000 and 62.8 grams of 2-propanol to yield a homogenous solution. To this solution was added, with mixing, 1.57 grams of TMXDI. After one hour of stirring, 1.36 grams of DYTEK A and 4.03 grams of DESMODUR W H 12MDI were added, and the resulting mixture was mixed for one day. The solution viscosity rose during this mixing.

A tackifier solution of 10.78 grams of NIREZ 2019 in 25.16 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 9

In a glass reactor equipped with a magnetic stirrer was placed 20.0 grams of JEFFAMINE ED2001 and 62.0 grams of 2-propanol to yield a homogenous solution. To this solution was added, with mixing, 1.05 grams of TMXDI. After one hour of stirring, 1.19 grams of DYTEK A and 4.07 grams of DESMODUR W H12MDI were added, and the resulting mixture was mixed for one day. The solution viscosity rose during this mixing.

A tackifier solution of 10.5 grams of NIREZ 2019 in 24.5 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 10

In a glass reactor equipped with a magnetic stirrer was mixed 149.6 grams of JEFFAMINE D2000, 26.4 grams of JEFFAMINE ED2001, 0.54 gram of DYTEK A and 467.0 grams of 2-propanol, to yield a homogenous solution. To this was added, with mixing, 23.46 grams of DESMODUR W H12MDI and the resulting mixture was mixed for one day. The solution viscosity rose during this mixing.

A tackifier solution of 160.0 grams of NIREZ 2019 in 374.0 grams of toluene was added to the polymer solution. The resulting solution was cast onto PET and dried at 70°C for 10 minutes to yield a 25 micrometer-thick coating. The peel adhesion and tackifier level values for this adhesive are recorded in Table 2.

### Example 11 (not within the claims)

In a glass reactor equipped with a magnetic stirrer was mixed 25.0 grams of PDMS diamine, 25.0 grams of JEFFAMINE ED2001, and 126.0 grams of 2-propanol, to yield a homogenous solution. To this was added, with mixing, 4.02 grams of DESMODUR W H12MDI and the resulting mixture was mixed for one day. The solution viscosity rose during this mixing.

A tackifier solution of 27.01 grams of MQ resin in 15.7 grams of toluene was added to the polymer solution. The resulting solution was cast onto PET and dried at 70°C for 10 minutes to yield a 25 micrometer-thick coating. The peel adhesion and tackifier level value for this adhesive is recorded in Table 2 (the failure mode was a cohesive split).

### Example 12

In a glass reactor equipped with a magnetic stirrer was placed 20.0 grams of JEFFAMINE ED2001 and 62.0 grams of 2-propanol to yield a homogenous solution. To this solution was added, with mixing, 1.56 grams of TMXDI. After one hour of stirring, 1.44 grams of DYTEK A and 3.95 grams of DESMODUR W H12MDI Were added, and the resulting mixture was mixed for one day. The solution viscosity rose during this mixing.

A tackifier solution of 13.5 grams of NIREZ 2019 in 31.5 grams of toluene was added to the polymer solution. The resulting solution was cast onto PET and dried at 70°C for 10 minutes to yield a 25 micrometer-thick coating. The peel adhesion and shear strength values for this adhesive are recorded in Table 2.

### Example 13

In a glass reactor equipped with a magnetic stirrer was placed 40.5 grams of JEFFAMINE D2000 and 116.0 grams of 2-propanol to yield a homogenous solution. To this solution was added 1.26 grams of DYTEK A and 8.23 grams of DESMODUR W H12MDI and the resulting mixture was mixed for one day. The solution viscosity rose during this mixing.

A tackifier solution of 30.0 grams of NIREZ 2019 in 70.0 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 14

In a glass reactor equipped with a magnetic stirrer was placed 20.0 grams of JEFFAMINE D2000 and 63.0 grams of 2-propanol to yield a homogenous solution. To this solution was added, with mixing, 1.18 grams of TMXDI. After one hour of stirring, 1.20 grams of DYTEK A and 4.08 grams of DESMODUR W H12MDI were added, and the resulting mixture was mixed for one day. The solution viscosity rose during this mixing.

A tackifier solution of 13.23 grams of NIREZ 2019 in 30.90 grams of toluene was added to the polymer solution. The resulting solution was cast onto PET and dried at 70°C for 10 minutes to yield a 25.4 micrometer-thick coating. The peel adhesion, shear strength and tackifier level values for this adhesive are recorded in Table 2.

### Example 15

In a glass reactor equipped with a magnetic stirrer was mixed 158.4 grams of JEFFAMINE D2000, 17.6 grams of JEFFAMINE ED2001, 0.50 gram of DYTEK A and 467.0 grams of 2-propanol, to yield a homogenous solution. To this was added, with mixing, 23.50 grams of DESMODUR W H12MDI and the resulting mixture was mixed for one day. The solution viscosity rose during this mixing.

A tackifier solution of 140.0 grams of NIREZ 2019 in 327.0 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 16

In a glass reactor equipped with a magnetic stirrer was mixed 140.8 grams of JEFFAMINE D2000, 35.2 grams of JEFFAMINE ED2001, 0.58 gram of DYTEK A and 467.0 grams of 2-propanol, to yield a homogenous solution. To this was added, with mixing, 23.42 grams of DESMODUR W H12MDI and the resulting mixture was mixed for one day. The solution viscosity rose during this mixing.

A tackifier solution of 160.0 grams of NIREZ 2019 in 374.0 grams of toluene was added to the polymer solution. The resulting solution was cast onto PET and dried at 70°C for 10 minutes to yield a 25 micrometer-thick coating. The peel adhesion and tackifier level values for this adhesive are recorded in Table 2.

### Example 17

In a glass reactor equipped with a magnetic stirrer was mixed 5.5 grams of JEFFAMINE D2000. 16.5 grams of JEFFAMINE ED2001, 0.14 gram of DYTEK A and 59.0 grams of 2-propanol, to yield a homogenous solution. To this was added, with mixing, 2.86 grams of DESMODUR W H12MDI and the resulting mixture was mixed for one day. The solution viscosity rose during this mixing.

A tackifier solution of 17.5 grams of NIREZ 2019 in 40.8 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 18

In a glass reactor equipped with a magnetic stirrer was placed 44.00 grams of JEFFAMINE D2000 and 116.0 grams of 2-propanol to yield a homogenous solution. To this solution was added 6.00 grams of DESMODUR W H12MDI and the resulting mixture was mixed for one day. The solution viscosity rose during this mixing. A tackifier solution of 10.0 grams of PICAFYN A100, in 23.3 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 19

In a glass reactor equipped with a magnetic stirrer was placed 44.00 grams of JEFFAMINE D2000 and 116.0 grams of 2-propanol to yield a homogenous solution. To this solution was added 6.00 grams of DESMODUR W H12MDI and the resulting mixture was mixed for one day. The solution viscosity rose during this mixing.

A tackifier solution of 30.0 grams of SP 553 in 70.0 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 2.

### Example 20

JEFFAMINE D2000 was fed into Zone 1 of a 25-millimeter diameter corotating twin screw extruder (available from Berstorff Corporation; Charlotte, NC) at a rate of 66.59 grams/minute and DESMODUR W H12MDI was fed into zone 2 at a rate of 9.05 grams/minute. The temperature profile for the extruder was: Zone 1 - 20°C; Zone 2 - 75°C; Zone 3 - 100°C; Zone 4 - 125°C; Zones 5 and 6 - 150°C; and the end cap and melt pump temperatures were also 150°C. The screw rotation rate was 200 revolutions per minute.

A total of 1.35 kilograms of polymer was collected from the extruder and cooled. A 20.0 gram sample of this polymer was then dissolved in 66.7 grams of 2-propanol. A tackifier solution of 8.00 grams of NIREZ 2019 in 26.7 grams of toluene was added to the polymer solution.

After one day of mixing, this solution was cast onto PET and dried at 70°C for 10 minutes to yield a 25 micrometer-thick coating. The peel adhesion, shear strength and tackifier level values for this adhesive are recorded in Table 2.

**Table 2**

| **Example** | **Tackifier Level (PHR)** | **Peel Adhesion (N/dm)** | **Shear Strength (minutes)** |
|---|---|---|---|
| 4 | 40 | 70.5 | 71 |
| 5 | 30 | 2.2 | 7,543 |
| 6 | 40 | 61.3 | 68 |
| 7 | 30 | 40.3 | 10,000 |
| 8 | 40 | 62.4 | 5,721 |
| 9 | 40 | 71.7 | 10,000 |
| 10 | 80 | 45.1 | * |
| 11 | 50 | 29.5 | * |
| 12 | 50 | 76.9 | 10,000 |
| 13 | 60 | 20.8 | 2,367 |
| 14 | 50 | 20.6 | 10,000 |
| 15 | 70 | 69.1 | 13 |
| 16 | 80 | 45.1 | * |
| 17 | 70 | 28.3 | 31 |
| 18 | 20 | 26.8 | 10 |
| 19 | 60 | 75.6 | 12 |
| 20 | 40 | 17.5 | 15 |

| | | | |
|---|---|---|---|
| * = Not Tested | | | |

### Example 21

The same polymer solution synthesis of Example 5 was repeated, except the amount of tackifier was doubled. In a glass reactor equipped with a magnetic stirrer was placed 40.0 grams of JEFFAMINE D2000 and 116.0 grams of 2-propanol to yield a homogenous solution. To this solution was added 1.44 grams of DYTEK A and 8.56 grams of DESMODUR W H12MDI and the resulting mixture was mixed for one day. The solution viscosity rose during this mixing.

A tackifier solution of 30.0 grams of NIREZ 2019 in 70.0 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 3.

### Example 22

The same polymer solution synthesis of Example 7 was repeated, except the amount of tackifier was doubled. In a glass reactor equipped with a magnetic stirrer was placed 20.0 grams of JEFFAMINE D2000 and 60.2 grams of 2-propanol to yield a homogenous solution. To this solution was added, with mixing, 1.18 grams of TMXDI. After one hour of stirring, 0.99 gram of DYTEK A and 3.64 grams of DESMODUR W H12MDI were added, and the resulting mixture was mixed for one day. The solution viscosity rose during this mixing.

A tackifier solution of 15.48 grams of NIREZ 2019 in 36.1 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 3.

### Example 23

The same polymer solution synthesis of Example 22 was repeated, except a lower level of tackifier was used. In a glass reactor equipped with a magnetic stirrer was placed 20.0 grams of JEFFAMINE D2000 and 60.2 grams of 2-propanol to yield a homogenous solution. To this solution was added, with mixing, 1.18 grams of TMXDI. After one hour of stirring, 0.99 gram of DYTEK A and 3.64 grams of DESMODUR W H 12MDI were added, and the resulting mixture was mixed for one day. The solution viscosity rose during this mixing.

A tackifier solution of 12.91 grams of NIREZ 2019 in 30.10 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 3.

### Example 24

The same polymer solution synthesis of Example 8 was repeated, except a higher level of tackifier was used. In a glass reactor equipped with a magnetic stirrer was placed 20.0 grams of JEFFAMINE D2000 and 63.0 grams of 2-propanol to yield a homogenous solution. To this solution was added, with mixing, 1.57 grams of TMXDI. After one hour of stirring, 1.36 grams of DYTEK A and 4.03 grams of DESMODUR W H12MDI were added, and the resulting mixture was mixed for one day. The solution viscosity rose during this mixing.

A tackifier solution of 16.18 grams of NIREZ 2019 in 37.7 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 3.

### Example 25

The same polymer solution synthesis of Example 11 was repeated, except a higher level of tackifier was used. In a glass reactor equipped with a magnetic stirrer was mixed 149.6 grams of JEFFAMINE D2000, 26.4 grams of JEFFAMINE ED2001, 0.54 gram of DYTEK A and 467.0 grams of 2-propanol, to yield a homogenous solution. To this was added, with mixing, 23.46 grams of DESMODUR W H12MDI and the resulting mixture was mixed for one day. The solution viscosity rose during this mixing.

A tackifier solution of 140.0 grams of NIREZ 2019 in 327.0 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 3.

### Example 26

The same polymer solution synthesis of Example 14 was repeated, except a higher level of tackifier was used. In a glass reactor equipped with a magnetic stirrer was placed 20.0 grams of JEFFAMINE D2000 and 63.0 grams of 2-propanol to yield a homogenous solution. To this solution was added, with mixing, 1.18 grams of TMXDI. After one hour of stirring, 1.20 grams of DYTEK A and 4.08 grams of DESMODUR W H12MDI were added, and the resulting mixture was mixed for one day. The solution viscosity rose during this mixing.

A tackifier solution of 15.88 grams of NIREZ 2019 in 37.10 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 3.

### Example 27

The same polymer solution synthesis of Example 14 was repeated, except a lower level of tackifier was used. In a glass reactor equipped with a magnetic stirrer was placed 20.0 grams of JEFFAMINE D2000 and 62.0 grams of 2-propanol to yield a homogenous solution. To this solution was added, with mixing, 1.18 grams of TMXDI. After one hour of stirring, 1.20 grams of DYTEK A and 4.08 grams of DESMODUR W H 12MDI were added, and the resulting mixture was mixed for one day. The solution viscosity rose during this mixing.

A tackifier solution of 10.58 grams of NIREZ 2019 in 24.7 grams of toluene was added to the polymer solution. The resulting solution was cast onto PET and dried at 70°C for 10 minutes to yield a 25 micrometer-thick coating. The peel adhesion, shear strength and tackifier level values for this adhesive are recorded in Table 3.

**Table 3**

| **Example** | **Tackifier Level (PHR)** | **Peel Adhesion (N/dm)** | **Shear Strength (minutes)** |
|---|---|---|---|
| 21 | 60 | 0.1 | 10,000 |
| 22 | 60 | 31.7 | 10,000 |
| 23 | 50 | 38.5 | 10,000 |
| 24 | 60 | 36.1 | 10,000 |
| 25 | 70 | 62.0 | 10 |
| 26 | 60 | 12.3 | 10,000 |
| 27 | 40 | 49.4 | 10,000 |

### Example 28

In a glass reactor equipped with a magnetic stirrer was placed 44.0 grams of JEFFAMINE D2000 and 116.0 grams of 2-propanol to yield a homogenous solution. To this solution was added 6.00 grams of DESMODUR W H12MDI and the resulting mixture was mixed for one day. The solution viscosity rose during this mixing.

A tackifier solution of 20.0 grams of NIREZ 2019 in 46.7 grams of toluene was added to the polymer solution. The resulting solution was cast onto PET and dried at 70°C for 10 minutes to yield a 25 micrometer-thick coating. The peel adhesion, shear strength, tackifier level, and crosslinker level values for this adhesive are recorded in Table 4.

### Example 29

In a glass reactor equipped with a magnetic stirrer was placed 20.0 grams of JEFFAMINE D2000 and 56.0 grams of 2-propanol to yield a homogenous solution. To this solution was added, with mixing, 1.18 grams of TMXDI. After one hour of stirring, 0.46 gram of DYTEK A and 2.43 grams of DESMODUR W H 12MDI were added, and the resulting mixture was mixed for one day. The solution viscosity rose during this mixing.

A tackifier solution of 9.63 grams of NIREZ 2019 in 22.50 grams of toluene was added to the polymer solution. The resulting solution was cast onto PET and dried at 70°C for 10 minutes to yield a 25 micrometer-thick coating. The peel adhesion, shear strength, tackifier level, and crosslinker level values for this adhesive are recorded in Table 4.

### Example 30

In a glass reactor equipped with a magnetic stirrer was placed 20.0 grams of JEFFAMINE D2000 and 58.0 grams of 2-propanol to yield a homogenous solution. To this solution was added, with mixing, 2.07 grams of TMXDI. After one hour of stirring, 0.78 gram of DYTEK A and 2.11 grams of DESMODUR W H 12MDI were added, and the resulting mixture was mixed for one day. The solution viscosity rose during this mixing.

A tackifier solution of 9.96 grams of NIREZ 2019 in 23.30 grams of toluene was added to the polymer solution. The resulting solution was cast onto PET and dried at 70°C for 10 minutes to yield a 25 micrometer-thick coating. The peel adhesion, shear strength, tackifier level, and crosslinker level values for this adhesive are recorded in Table 4.

### Example 31

To the tackified PSA solution of Example 28, was added 0.50 grams of ACP dissolved in 1.16 grams of ethyl acetate. After one day of mixing, this solution was cast onto PET and dried at 70°C for 10 minutes to yield a 25 micrometer-thick coating. The peel adhesion, shear strength, tackifier level, and crosslinker level values for this adhesive are recorded in Table 4.

### Example 32

To the tackified PSA solution of Example 28, was added 2.50 grams of ACP dissolved in 5.83 grams of ethyl acetate. After one day of mixing, this solution was cast onto PET and dried at 70°C for 10 minutes to yield a 25 micrometer-thick coating. The peel adhesion, shear strength, tackifier level, and crosslinker level values for this adhesive are recorded in Table 4.

### Example 33

To the tackified PSA solution of Example 28, was added 5.00 grams of ACP dissolved in 11.67 grams of ethyl acetate. After one day of mixing, this solution was cast onto PET and dried at 70°C for 10 minutes to yield a 25 micrometer-thick coating. The peel adhesion, shear strength, tackifier level, and crosslinker level values for this adhesive are recorded in Table 4.

### Example 34

To the tackified PSA solution of Example 29, was added 1.20 grams of ACP dissolved in 2.81 grams of ethyl acetate. After one day of mixing, this solution was cast onto PET and dried at 70°C for 10 minutes to yield a 25 micrometer-thick coating. The peel adhesion, shear strength, tackifier level, and crosslinker level values for this adhesive are recorded in Table 4.

### Example 35

To the tackified PSA solution of Example 30, was added 1.25 grams of ACP dissolved in 2.90 grams of ethyl acetate. After one day of mixing, this solution was cast onto PET and dried at 70°C for 10 minutes to yield a 25 micrometer-thick coating. The peel adhesion, shear strength, tackifier level, and crosslinker level values for this adhesive are recorded in Table 4.

**Table 4**

| **Example** | **Tackifier Level (PHR)** | **Crosslinker Level (PHR)** | **Peel Adhesion (N/dm)** | **Shear Strength (minutes)** |
|---|---|---|---|---|
| 28 | 40 | --- | 108.4 | 3 |
| 29 | 40 | --- | 72.6 | 284 |
| 30 | 40 | --- | 63.5 | 9 |
| 31 | 40 | 1 | 158.8 | 5 |
| 32 | 40 | 5 | 86.9 | 10,000 |
| 33 | 40 | 10 | 77.2 | 10,000 |
| 34 | 40 | 5 | 60.2 | 2320 |
| 35 | 40 | 5 | 44.2 | 200 |

### Example 36

The same adhesive formulation prepared in Example 5 was coated onto PET, and applied to a glass plate with eight passes of a 2-kilogram roller and allowed to dwell at 120°C for 30 minutes without the application of additional pressure. The samples were allowed to cool in a controlled temperature (22°C) and humidity (50% relative humidity) environment for 30 minutes to allow the samples to reach ambient temperature. The peel adhesion and tackifier level values for this adhesive, which is a heat-activatable adhesive, are shown in Table 5 along with those of Example 5 for comparison.

### Example 37

The same adhesive formulation prepared in Example 21 was coated onto PET, and applied to a glass plate with eight passes of a 2-kilogram roller and allowed to dwell at 120°C for 30 minutes without the application of additional pressure. The samples were allowed to cool in a controlled temperature (22°C) and humidity (50% relative humidity) environment for 30 minutes to allow the samples to reach ambient temperature. The peel adhesion and tackifier level for this adhesive, which is a heat-activatable adhesive, are shown in Table 5 along with those of Example 21 for comparison.

**Table 5**

| **Example** | **Tackifier Level (PHR)** | **Elevated Temperature (120°C) Dwell (minutes)** | **Peel Adhesion (N/dm)** |
|---|---|---|---|
| 5 | 30 | 0 | 2.2 |
| 36 | 30 | 30 | 38.9 |
| 21 | 60 | 0 | 0.1 |
| 37 | 60 | 30 | 66 |

### Comparative Examples 1A and 1B

PSA tapes were prepared using the polysiloxane polyurea elastomer described in Example 21 of U.S. Patent No. 5,461,134, except a mixture of 70 parts toluene and 30 parts 2-propanol (by weight) was used to prepare the elastomer and the elastomer was formulated into a PSA solution with varying levels of MQ resin tackifier. The resulting elastomer was a 1:1 copolymer (on a molar basis) of 21,213 molecular weight silicone diamine and H-MDI. The elastomer was blended with differing levels of MQ resin tackifier using a mixture of 75 parts toluene and 25 parts 2-propanol (by weight) as the solvent system for the PSA solution. The final solids content of the PSA solution was 25%. The peel adhesion and shear strength values for these adhesives are recorded in Comparative Table 1.

### Comparative Examples 2A and 2B

PSA tapes was prepared using the polysiloxane polyurea elastomer described in Example 23 of U.S. Patent No. 5,461,134, except a mixture of 70 parts toluene and 30 parts 2-propanol (by weight) was used to prepare the elastomer and the elastomer was formulated into a PSA solution with varying levels of MQ resin tackifier. The resulting elastomer was a 1:1 copolymer (on a molar basis) of 36,380 molecular weight silicone diamine and H-MDI. The elastomer was blended with differing levels of MQ resin tackifier using a mixture of 75 parts toluene and 25 parts 2-propanol (by weight) as the solvent system for the PSA solution, The final solids content of the PSA solution was 20%. The peel adhesion and shear strength values for these adhesives are recorded in Comparative Table 1.

**Comparative Table 1**

| **Comparative Example** | **Diamine Molecular Weight** | **MQ resin level (PHR)** | **Peel Adhesion (N/dm)** | **Shear Strength (minutes)** |
|---|---|---|---|---|
| 1A | 21,200 | 45 | 2.9 | 645 |
| 1B | 21,200 | 100 | 40.3 | 274 |
| 2A | 36,380 | 45 | 7.6 | 897 |
| 2B | 36,380 | 100 | 43.1 | 1,214 |

Various modifications and alterations of the invention will become apparent to those skilled in the art without departing from the scope of the invention, which is defined by the accompanying claims.

## Claims

1. An adhesive composition comprising:
a polyurea-based polymer; and
optionally, at least one tackifier,
wherein the polyurea-based polymer is a segmented copolymer represented by the repeating units of Formula I: 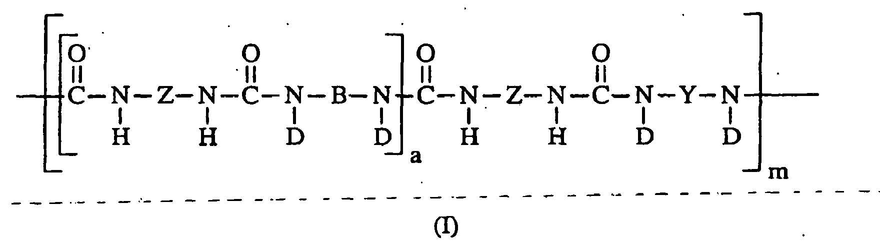 wherein:
each B is independently a polyvalent radical;
each D is independently selected from the group consisting of hydrogen, an alkyl group, a cycloalkyl group, a phenyl group, a group that completes a ring structure that includes B to form a heterocycle, and mixtures thereof;
each Z is independently a polyvalent radical;
each Y is independently a polyoxyalkylene;
m is an integer greater than zero; and
a is an integer greater than or equal to zero, and
wherein the adhesive composition is one of a pressure-sensitive adhesive composition and a heat-activatable adhesive composition and wherein the polyurea-based polymer is free of segments derived from polysiloxane polyamines.

2. The composition of claim 1 comprising said polyurea-based polymer and 45 parts by weight or less of a tackifier per hundred parts by weight of the polyurea-based polymer.

3. The composition of claim 2, wherein B is a polyoxyalkylene.

4. The composition of claim 2, wherein the polyurea-based polymer is a segmented copolymer, wherein at least 0.5 mole fraction of linkages between segments in a backbone of the polymer are urea linkages.

5. An adhesive tape comprising:
a backing; and
the adhesive composition of claim 2 coated on at least a portion thereof.

6. A method of preparing the adhesive composition of claim 1, the method comprising the steps of:
providing at least one polyisocyanate;
providing at least one polyamine;
reacting the at least one polyisocyanate with the at least one polyamine to form the polyurea-based polymer; and
optionally adding the tackifier to the polyurea-based polymer.

## Patentansprüche

1. Klebstoffzusammensetzung, umfassend:
ein Polymer auf Polyharnstoffbasis und
gegebenenfalls mindestens einen Klebrigmacher,
wobei das Polymer auf Polyharnstoffbasis ein segmentiertes Copolymer ist, das durch die Wiederholungseinheiten der Formel I: 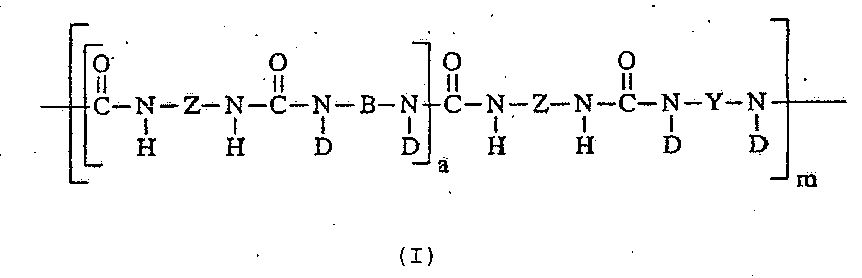 dargestellt ist,
wobei
jedes B unabhängig ein mehrwertiges Radikal ist;
jedes D unabhängig aus der Gruppe ausgewählt ist, bestehend aus Wasserstoff, einer Alkylgruppe, einer Cycloalkylgruppe, einer Phenylgruppe, einer Gruppe, die eine Ringstruktur, die B einschließt, unter Bildung eines Heterozyklus vervollständigt, und Mischungen derselben;
jedes Z unabhängig ein mehrwertiges Radikal ist;
jedes Y unabhängig ein Polyoxyalkylen ist;
m eine ganze Zahl von größer als null ist; und
a eine ganze Zahl von größer als oder gleich null ist, und
wobei die Klebstoffzusammensetzung eine von einer Haftklebstoffzusammensetzung und einer wärmeaktivierbaren Klebstoffzusammensetzung ist und wobei das Polymer auf Polyharnstoffbasis von Segmenten frei ist, die von Polysiloxanpolyaminen abstammen.

2. Zusammensetzung nach Anspruch 1, umfassend das Polymer auf Polyharnstoffbasis und 45 Gewichtsteile oder weniger eines Klebrigmachers pro hundert Gewichtsteile des Polymers auf Polyharnstoffbasis.

3. Zusammensetzung nach Anspruch 2, wobei B ein Polyoxyalkylen ist.

4. Zusammensetzung nach Anspruch 2, wobei das Polymer auf Polyharnstoffbasis ein segmentiertes Copolymer ist, wobei mindestens 0,5 Molfraktionen von Verknüpfungen zwischen Segmenten in einer Hauptkette des Polymers Harnstoffverknüpfungen sind.

5. Klebeband, umfassend:
einen Träger; und
die klebstoffzusammensetzung nach Anspruch 2, die auf mindestens einen Teil desselben aufgebracht ist.

6. Verfahren zum Herstellen der Klebstoffzusammensetzung nach Anspruch 1, wobei das Verfahren die Schritte umfasst:
Bereitstellen mindestens eines Polyisocyanats;
Bereitstellen mindestens eines Polyamins;
Umsetzen des mindestens einen Polyisocyanats mit dem mindestens einen Polyamin unter Bildung des Polymers auf Polyharnstoffbasis; und
gegebenenfalls Zusetzen des Klebrigmachers zu dem Polymer auf Polyharnstoffbasis.

## Revendications

1. Composition adhésive comprenant :
un polymère à base de polyurée ; et
éventuellement, au moins un agent collant,
dans laquelle le polymère à base de polyurée est un copolymère segmenté représenté par lés unités de répétition de la Formulé I : 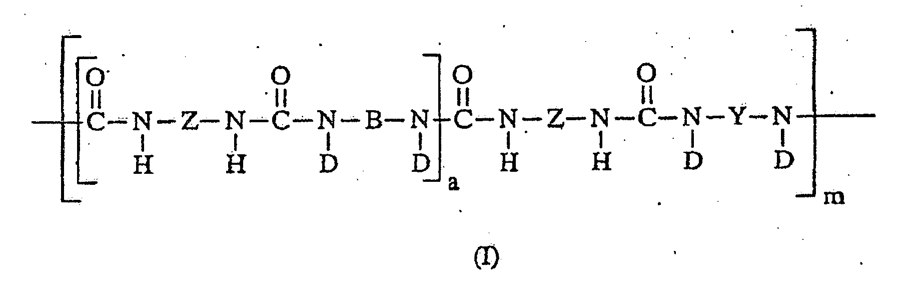 dans laquelle :
chaque B est indépendamment un radical polyvalent ; chaque D est indépendamment sélectionné dans le groupe constitué de l'hydrogène, d'un groupe alkyle, d'un groupe cycloalkyle, d'un groupe phényle, d'un groupe qui complète une structure en cycle qui comprend B pour former un hétérocycle, et de mélanges de ceux-ci ;
chaque Z est indépendamment un radical polyvalent ;
chaque Y est indépendamment un polyoxyalkylène ;
m est un nombre entier supérieur à zéro ; et
a. est un nombre entier supérieur ou égal à zéro ; et
dans laquelle la composition adhésive est l'une parmi une composition adhésive sensible à la pression et une composition adhésive thermocollante et dans laquelle le polymère à base de polyurée est exempt de segments dérivés de polysiloxane polyamines.

2. Composition selon la revendication 1, comprenant ledit polymère à base de polyurée et 45 parties pondérales ou moins d'un agent collant pour 100 parties pondérales du polymère à base de polyurée.

3. Composition selon la revendication 2, dans laquelle B est un polyoxyaldylène.

4. Composition selon la revendication 2, dans laquelle le polymère à base de polyurée est un copolymère segmenté, une fraction molaire d'au moins 0,5 des liaisons entre les segments dans un squelette du polymère étant constituée de liaisons urée.

5. Ruban adhésif comprenant :
un support ; et
la composition adhésive selon la revendication 2 appliquée sur au moins une partie de celui-ci.

6. Méthode de préparation de la composition adhésive selon la revendication 1, la méthode comprenant les étapes qui consistent à :
fournir au moins un polyisocyanate ;
fournir au moins une polyamine ;
faire réagir ledit au moins un polyisocyanate avec ladite au moins une polyamine pour former le polymère à base de polyurée ; et
éventuellement, ajouter l'agent collant au polymère à base de polyurée.
